# EUROPEAN PATENT SPECIFICATION

(11) **EP 0 751 386 B1**
(45) Date of publication and mention of the grant of the patent: **23.06.1999**
(21) Application number: 96202432.9
(22) Date of filing: 08.04.1993
(51) Int. Cl.: G01M 11/00, G01M 11/08, G01D 5/353

(54) **A fibre optic cable monitoring system**
Überwachungssystem für faseroptisches Kabel
Système de surveillance d'un câble à fibre optique

(30) Priority: 10.04.1992 CA 2065785
(43) Date of publication of application: 02.01.1997
(62) Divisional of application: 93907714.5
(73) Proprietor: NORSCAN INSTRUMENTS, LTD., Winnipeg, Manitoba R2J 4B3 (CA)
(72) Inventor: Vokey, David E., Sydney, British Columbia V8L 3X9 (CA); Sontag, Kenneth N., Winnipeg, Manitoba R2C 2Z2 (CA); Kraft, Heinrich, D-8633 Rodental (DE)
(74) Representative: Adkins, Michael

(56) References cited:
- EP-A- 0 212 804
- EP-A- 0 332 473
- DE-A- 3 534 990
- FR-A- 2 505 045
- GB-A- 2 201 511
- US-A- 4 298 794
- PATENT ABSTRACTS OF JAPAN vol. 4, no. 95 (P-18) [577] , 9 July 1980 & JP-A-55 057125 (NIPPON DENSHIN DENWA KOSHA), 26 April 1980,
- PATENT ABSTRACTS OF JAPAN vol. 6, no. 217 (P-152) [1095] , 30 October 1982 & JP-A-57 122341 (NIPPON DENSHIN DENWA KOSHA), 30 July 1982,

## Description

### FIELD OF THE INVENTION

The present invention relates to communication cable monitoring and more particularly to the monitoring of fibre optic communication cables.

### BACKGROUND

Telephone and other communication cables are subject to damage and wear from environmental and man made causes. Severe weather conditions such as high winds, snow, icing, rain, floods, and lightning can damage exposed cables. Damage can also result from nearby construction or vandalism.

Frequently, damage does not cause an immediate loss of service but results in a slow degradation of the cable system which often ends in failure of the cable and loss of service. Repair must then be carried out on an emergency basis, which is costly both in restoration costs and lost revenues.

Dating back to the first major cable installations, maintenance monitoring systems have been used to provide early warning of cable trouble. This allows the scheduling of maintenance to avoid lost service and costly repair.

Modern telephone cables, including fibre optic cables, are often filled with water blocking compounds to prevent water migration into the cable core. While providing good resistance to water damage, the filling compounds also block or severely restrict air flow thus making air pressure monitoring systems useless. To overcome this limitation and to provide maintenance monitoring on filled telephone cables, all electronic systems were developed such as those described by McNaughton et al in United States patent 4,480,251 and Vokey et al in United States patent 5,077,526.

Fibre optic cables constructed for applications such as inclusion in overhead power transmission static wires or suspended below phase conductors on transmission towers use all dielectric insulating materials. As a result, conventional cable and splice monitoring methods, such as described by the McNaughton et al and Vokey et al patents which require a metallic electrical conductor element can not be applied.

OTDR techniques, which launch light pulses into a fibre and measure reflected energy to determine loss increases, have been used to monitor optical cables and splices. These methods are expensive and require a special moisture detecting fibre bending device in the splice closures in an attempt to monitor for water ingress. Additionally, the splice bending device is not always predictable in its performance and the exact optical distance to each splice must be known precisely.

From JP- A- 55- 57125 (abstract) it is known to insert an optical filter into an optical signal path in response to leakage. DE- A1- 3534990 describes an optical attenuation measurement with two closely adjacent wave lengths.

### SUMMARY

The present invention addresses the above problems and provides apparatus and method of independent claims 1,5.

The signal losses are indicative of the condition of the cable. For example, with signals at wave lengths of 1300 nm and 1550 nm, a similar loss at both wave lengths can be attributed to microbending. Microbending could be a result of cable crushing or a temperature related change in the cable structure. A significant loss increase at 1550 nm only can be related to macrobending, usually caused by a kink in the cable or a buckling of the fibre.

Preferably, the optical signals are modulated at selected frequencies. The combined signals, when received, are converted to an electrical signal, which is then filtered to separate the two signals.

Light signals may be generated with two lasers and distributed over a number of fibres. The individual fibres are then monitored by separate receivers, and the receiver outputs are scanned by a multiplexer which provides output to a conventional monitoring alarm unit.

These aspects of the present invention will be more fully described in the following detailed description in connection with the accompanying drawings.

### BRIEF DESCRIPTION OF THE DRAWINGS

In the accompanying drawings which illustrate an exemplary embodiment of the present invention:
Figure 1 is a schematic of a monitoring system according to the present invention;
Figure 2 is a schematic of a fibre optic transmitter; and
Figure 3 is a schematic of an optical receiver.

### DETAILED DESCRIPTION

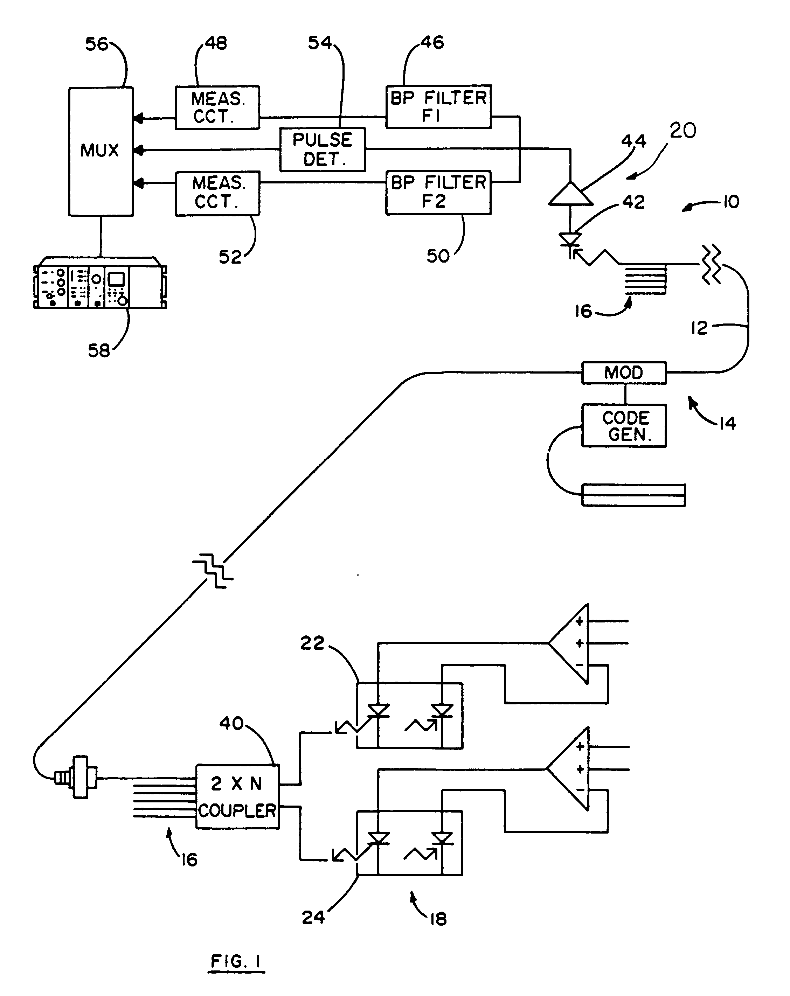

Referring to the accompanying drawings, and especially Figure 1, there is illustrated a fibre optic cable monitoring system 10 associated with a fibre optic cable 12. The illustrated cable is a single mode (sm) fibre cable with a length up to 100 km. The cable is shown as including a splice 14 part way along its length. Conventionally, the complete cable would include a number of splices. The cable includes a number of optical fibres 16.

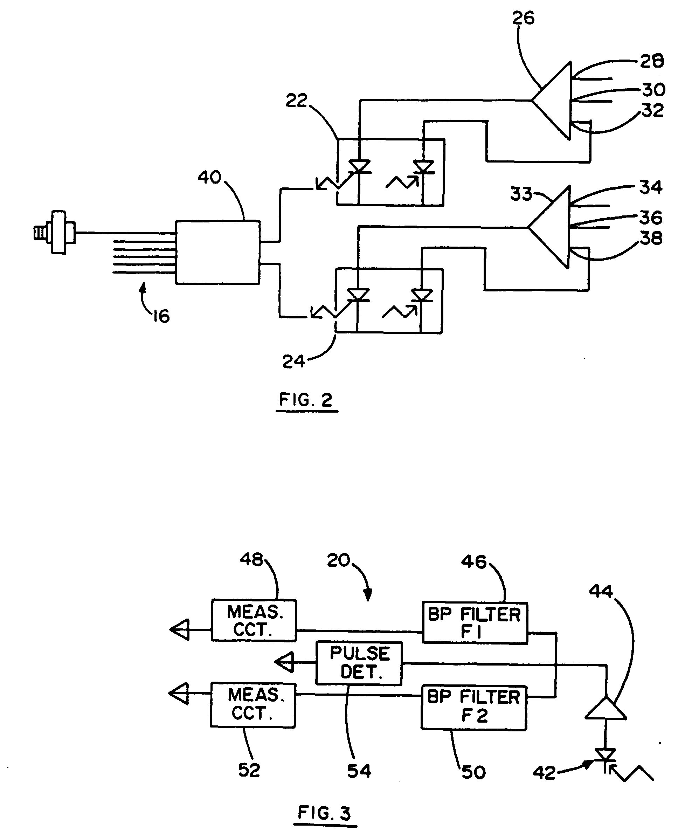

The system 10 includes an optical transmitter unit 18 at one end of the cable and an optical receiver 20 at the other. As illustrated most particularly in Figure 2, the optical transmitter is a dual wavelength laser transmitter including a stabilized laser source 22 emitting light with a wave length of 1300 nm and second stabilized laser source 24 emitting light with a wavelength of 1550 nm. The laser source 22 is connected to a modulating amplifier 26. The inputs to the amplifier include a modulating input 28 with bias input 30 and a negative feedback 32. The modulating input has a frequency F1 for modulating the transmitted 1300 nm light at that frequency. The laser 24 is likewise associated with an amplifier 33 with a modulating input 34, a bias input 36 and a negative feedback 38. The frequency of the modulating signal F2 is different from the modulating frequency F1. The lasers are mated to a wave division multiplex coupler 40. The coupler combines the light output of the lasers and divides the light energy equally to N output ports. A monitored fibre is connected to each of the output ports. Consequently, the single pair of lasers provides optical power to several monitored fibres or cables.

At the receiving end of the fibre is an optical receiver 20 (Figure 3) that intercepts and detects the laser light from each monitored fibre on a PIN detector diode 42. The light is converted by the diode to an electrical signal that is amplified by preamplifier 44. The electrical signal contains frequency components at F1 and F2, which are separated by band pass filters 46 and 50 and measured by measuring circuits 48 and 52. The optical loss of the fibre length at both wavelengths is calculated from the measured amplitudes. The optical receiver also includes a pulse detector 54 for monitoring pulses generated by optical modulators included in the splices 14.

The output from the optical receiver is delivered to a multiplexer 56 which scans the outputs from the various monitored fibres and provides input to a central office terminal 58 that includes alarm circuits for generating an alarm when a detected fibre loss exceeds a predetermined maximum loss. The terminal also includes a decoding circuit for decoding the pulses from the pulse detector 54.

The optical losses over the fibre at the two monitoring signal wavelengths are calculated from the measured amplitude of each of the converted electrical signals. Any additional fibre loss over the nominal is analyzed.

If similar loss increases are detected at both wavelengths, then the loss increases can be attributed to microbending, which could be a result of cable crushing or a temperature related change in the cable structure. If a significant loss increase is detected at 1550 nm only, the problem can be related to macrobending, which is usually caused by a kink in the cable or a buckling of the fibre.

## Claims

1. A fibre optic cable monitoring system for monitoring the physical condition of at least one single mode optical fibre (12) having first and second ends, the system comprising:
light signal generating means (22, 24) for generating first and second monitoring signals of light at different wave lengths, the first signal having a wave length selected to produce a significant attenuation in response to macrobending of a fibre along which the first signal is transmitted, the second signal having a wave length selected to provide substantially less attenuation than that of the first signal in response to macrobending of a fibre along which the first and second signals are transmitted, and the wave lengths of the first and second signals being selected to produce similar amounts of attenuation in response to microbending of a fibre along which the two signals are transmitted;
light signal transmitter means (40) for simultaneously transmitting the two monitoring signals into the first end of the fibre;
optical receiver means (20) optically coupled to the second end of the fibre for simultaneously receiving the two monitoring signals; and
signal processing means including
means (46, 50) for separating the monitoring signals, and
means (48, 52) for measuring the magnitudes of the separated signals.

2. A monitoring system according to Claim 1 wherein the light signal transmitter means (18) comprise means (26, 33) for amplitude modulating the monitoring signals at different signal frequencies.

3. A monitoring system according to Claim 1 or 2 wherein the optical receiver means (20) comprise means (42) for converting the monitoring signals of light to electrical signals having the respective signal frequencies and the signal processing means include frequency discrimination means (46, 50) for separating the two electrical signals.

4. A monitoring system according to Claim 1, 2 or 3 wherein the light signal generating means comprise means (22, 24) for generating two monitoring signals of light at wave lengths of approximately 1300 nm and 1550 nm.

5. A method of monitoring a single mode optical fibre having a terminal end and a receiving end comprising;
transmitting along the fibre from the terminal end a first light signal having a first wave length selected to produce significant attenuation of the signal in response to macrobending or microbending of the fibre;
simultaneously transmitting along the fibre from the terminal end a second light signal having a second wave length selected to produce significant attenuation of the signal in response to microbending of the fibre and significantly less attenuation of the second signal than that of the first signal in response to macrobending of the fibre;
monitoring the two signals at the receiving end; and
determining losses in the two signals.

6. A method according to Claim 5 including generating an alarm representing microbending of the fibre in response to losses in both signals.

7. A method according to Claim 6 including generating an alarm representing macrobending of the fibre in response to losses only in the signal having the longer wave length.

8. A monitoring system according to Claim 5, 6 or 7 wherein the two light signals have wave lengths of approximately 1300 nm and 1550 nm.

## Patentansprüche

1. Ein Überwachungssystem für faseroptische Kabel zur Überwachung des physikalischen Zustandes wenigstens einer MonomodusLichtleitfaser (12) mit einem ersten und einem zweiten Ende, das System umfasst:
Lichtsignal-Genererierungsmittel (22, 24) zur Generierung von ersten und zweiten Überwachungs-Signalen von Licht mit verschiedenen Wellenlängen, wobei das erste Signal eine Wellenlänge aufweist, die ausgewählt ist zur Erzeugung einer bedeutsamen Dämpfung bei grossen Biegungen der Lichtleitfaser, längs welcher das erste Signal übertragen wird, und wobei das zweite Signal eine Wellenlänge aufweist, die ausgewählt ist zur Lieferung einer wesentlich kleineren Dämpfung als diejenige des ersten Signals bei einer grossen Biegung einer Faser, längs welcher das erste und das zweite Signal gesendet werden, und wobei die Wellenlängen des ersten und des zweiten Signals so ausgewählt sind, dass sie ähnliche Beträge der Dämpfung ergeben in Abhängigkeit von bzw. bei kleinen Biegungen einer Lichtleitfaser, längs welcher die beiden Signale gesendet werden;
Lichtsignal-Sendemittel (40) zur gleichzeitigen Sendung und/oder Übertragung der beiden Überwachungssignale in das erste Ende der Lichtleitfaser;
optische Empfängermittel (20), die optisch gekoppelt sind mit dem zweiten Ende der Faser zum gleichzeitigen Empfang der beiden Überwachungssignale; und
Signalverarbeitungsmittel mit
Mitteln (46, 50) zur Trennung der Überwachungssignale und
Mitteln (48, 52) zur Messung der Beträge der getrennten Signale.

2. Ein Überwachungssystem gemäss Anspruch 1, wobei die Lichtsignal-Sendemittel (18) Mittel (26, 33) zur Amplituden-Modulation der Überwachungssignale bei verschiedenen Signalfrequenzen umfassen.

3. Ein Überwachungssystem gemäss Anspruch 1 oder 2, wobei die optischen Empfängermittel (20) Mittel (42) zur Umwandlung der Überwachungs-Lichtsignale in elektrische Signale aufweisen, welche die entsprechende Signalfrequenz haben, und wobei die Signalverarbeitungsmittel Diskriminierungsmittel oder Filtermittel (46, 50) zur Trennung der beiden elektrischen Signale aufweisen.

4. Ein Überwachungssystem gemäss Anspruch 1, 2 oder 3, wobei die Lichtsignal-Generierungsmittel Mittel (22, 24) umfassen zur Erzeugung zweier Überwachungssignale von Lichtwellenlängen von ungefähr 1300 nm und 1550 nm.

5. Ein Verfahren zur Überwachung einer Einzelmodus-Lichtleitfaser mit einem Terminal-Ende und einem Empfangs-Ende, umfassend:
Senden längs der Faser von ihrem Terminal- bzw. Ausgangsende ein erstes Lichtsignal mit einer ersten Wellenlänge, die ausgewählt ist zur Erzeugung einer bedeutsamen Dämpfung des Signals bei grossen Biegungen oder kleinen Biegungen der Faser;
gleichzeitiges Senden längs der Faser von dem Terminalende eines zweiten Lichtsignals, welches eine zweite Wellenlänge aufweist, die ausgewählt ist zur Erzeugung einer bedeutsamen Dämpfung des Signals in Abhängigkeit von kleinen Biegungen der Faser und bedeutend kleinerer Dämpfung des zweiten Signals als derjenigen des ersten Signals in Abhängigkeit von grossen Biegungen der Faser;
Überwachung oder Auswertung der beiden Signale an dem Empfängerende; und
Bestimmung der Verluste der beiden Signale.

6. Ein Verfahren gemäss Anspruch 5, wobei ein Alarm erzeugt wird, der eine kleine Biegung oder Mikro-Biegung der Faser, entsprechend den Verlusten bei beiden Signalen, repräsentiert.

7. Ein Verfahren gemäss Anspruch 6, wobei man einen Alarm erzeugt, der eine Makro-Biegung oder grosse Biegung der Faser entsprechend der Verluste nur des Signals mit der längeren Wellenlänge repräsentiert.

8. Ein Überwachungssystem gemäss Ansprüchen 5, 6 oder 7, wobei die beiden Lichtsignale Wellenlängen von etwa 1300 nm und 1550 nm haben.

## Revendications

1. Système de surveillance d'un câble à fibre optique pour surveiller l'état physique d'au moins une fibre optique (12) à mode unique présentant des première et seconde extrémités, le système comprenant :
des moyens de protection (22, 24) de signaux lumineux pour produire des premier et second signaux lumineux de surveillance de différentes longueurs d'onde, le premier signal ayant une longueur d'onde choisie pour produire une atténuation significative en réponse à une macro-courbure d'une fibre le long de laquelle est transmis le premier signal, le second signal ayant une longueur d'onde choisie pour produire une atténuation sensiblement moindre que celle du premier signal en réponse à la macro-courbure d'une fibre le long de laquelle sont transmis les premier et second signaux, et les longueurs d'onde des premier et second signaux étant choisies pour produire des valeurs similaires d'atténuation en réponse à une micro-courbure d'une fibre le long de laquelle les deux signaux sont transmis ;
un moyen de transmission de signaux lumineux (40) pour transmettre simultanément les deux signaux de surveillance dans la première extrémité de la fibre ;
un moyen récepteur optique (20) couplé optiquement à la seconde extrémité de la fibre pour recevoir simultanément les deux signaux de surveillance ;et
un moyen de traitement de signaux comprenant :
un moyen (46, 50) pour séparer les signaux de surveillance, et
un moyen (48,52) pour mesurer les grandeurs des signaux séparés.

2. Système de surveillance selon la revendication 1, dans lequel le moyen (18) de transmission de signaux lumineux comprend des moyens pour moduler l'amplitude des signaux de surveillance à différentes fréquences de ces signaux.

3. Système de surveillance selon la revendication 1 ou 2, dans lequel le moyen récepteur optique (20) comprend un moyen (42) pour convertir les signaux lumineux de surveillance en des signaux électriques ayant les fréquences des signaux respectifs, et le moyen de traitement des signaux comprend un moyen de discrimination de fréquences (46, 50) pour séparer les deux signaux électriques.

4. Système de surveillance selon la revendication 1, 2 ou3, dans lequel le moyen de production de signaux lumineux comprend un moyen (22, 24) pour produire deux signaux lumineux de surveillance dont les longueurs d'onde sont approximativement 1300 nm et 1550 nm.

5. Procédé de surveillance d'une fibre optique à mode unique présentant une extrémité terminale, et une extrémité réceptrice, qui comprend les opérations consistant :
à transmettre le long de la fibre, à partir de l'extrémité terminale, un premier signal lumineux d'une première longueur d'onde choisie pour produire une atténuation significative du signal en réponse à une macro-courbure ou une micro-courbure de la fibre ;
à transmettre simultanément le long de la fibre, à partir de l'extrémité terminale, un second signal lumineux d'une seconde longueur d'onde choisie pour produire une atténuation significative du signal en réponse à une micro-courbure de la fibre et une atténuation du second signal sensiblement moindre que celle du premier signal en réponse à une macro-courbure de la fibre ;
à surveiller les deux signaux à l'extrémité de réception ; et
à déterminer les pertes dans les deux signaux.

6. Procédé selon la revendication 5, comprenant la production d'une alarme représentant une micro-courbure de la fibre en réponse à des pertes dans les deux signaux.

7. Procédé selon la revendication 6, comprenant la production d'une alarme représentant une macro-courbure de la fibre en réponse à des pertes seulement dans le signal de plus grande longueur d'onde.

8. Système de surveillance selon la revendication 5, 6 ou 7, dans lequel les deux signaux lumineux ont des longueurs d'onde d'approximativement 1300 nm et 1550 nm.
